# EUROPEAN PATENT SPECIFICATION

(11) **EP 2 172 686 B1**
(45) Date of publication and mention of the grant of the patent: **26.09.2012**
(21) Application number: 09425384.6
(22) Date of filing: 30.09.2009
(51) Int. Cl.: F16M 11/12, G03B 17/56

(54) **CAMERA SUPPORT HEAD FOR A MOTION PICTURE CAMERA FOR CINEMATOGRAPHIC, TELEVISION AND LIKE SHOOTINGS**
STATIVKOPF FÜR EINE FILMKAMERA FÜR KINO-, FERNSEH- UND ÄHNLICHE AUFNAHMEN
TÊTE DE SUPPORT POUR TELECAMERA POUR REPRISES CINEMATOGRAPHIQUES, TELEVISIVES ET SIMILAIRES

(30) Priority: 03.10.2008 IT RM20080526
(43) Date of publication of application: 07.04.2010
(73) Proprietor: Cartoni S.p.A., 00159 Roma (IT)
(72) Inventor: Cartoni, Guido, 00159 Roma (IT); Macchia, Domenico, 00159 Roma (IT)
(74) Representative: Iannone, Carlo Luigi

(56) References cited:
- DE-C1- 4 238 900
- DE-U1-202005 001 542
- DE-U1-202005 006 620
- GB-A- 2 291 468
- GB-A- 2 447 258
- US-A- 4 249 817
- US-A1- 2006 177 215
- US-A1- 2007 164 176

## Description

The present invention relates to a camera support head for motion picture, TV and like shootings.

Examples of conventional camera support heads are disclosed in GB 2 447 258 A and US 2007/0 164 176 A1.

More specifically, the invention concerns a camera support head of the above kind providing a further rotation freedom degree with respect to the heads presently available on the market.

L-type camera support heads are available on the market since many years, said heads permitting orientation both along the pan plane and along tilt plane.

Said heads provide an L shape bracket, with a first horizontal arm and a second vertical arm.

Said two arms are integrally coupled each other with a fixed angle of 90°.

First arm end not coupled with the second arm, is coupled with an element for rotation along pan plane, while on the second arm end not coupled with first arm is provided an element for rotation along tilt plane, a bracket being coupled to this last end, said bracket providing means for fixing the camera.

Thus, there are defined a first vertical axis, passing through said element for rotation along pan plane and through said first arm end coupled to the same, a second vertical axis, passing through the 90° coupling between said first and second arms, and a horizontal axis, about which said camera supporting bracket rotates.

This kind of brackets presently available on the market permit a full rotation (360°) both along pan plane and along tilt plane.

However, useful rotation (in order to make artistically valid shootings) along this second plane is limited to an arc of 250° - 270° since, when camera is rotated downward, it will have the head support (tripod, dolly, ecc) within the shooting plane.

The solution suggested according to the present invention permits solving the above mentioned drawback, by realizing a head of the above kind wherein it is provided a snood on the 90° coupling between said first arm and said second arm, so as to permit rotation of the camera along a second vertical axis (specifically the axis passing through the 90° coupling between said first arm and said second arm of the L shaped structure), which is offset and parallel with respect to the vertical axis passing through the element for rotation along pan plane.

It is therefore specific object of the present invention a camera support head for motion picture, TV and like shootings, comprising the features defined in independent claim 1.

Furthermore, according to the invention, the rotation of said second vertical arm with respect to said first horizontal arm can be fixed in any point along the 360° arc.

Still according to the invention the rotation can be fixed according to set orientation points.

Always according to the invention, the rotation of said second vertical arm with respect to said first horizontal arm is obtained by a joint comprised of a first plate, integral with said first arm, and a second plate, integral with said second arm, fixing and releasing of rotation being obtained by fixing/release means.

Particularly, according to the invention, the fixing/release means are comprised of a screw, of a pin, of a snapping element and like.

Furthermore, according to the invention, rotation of the bracket with respect to said second vertical arm is obtained by a handle.

Still according to the invention, openings are provided in the first horizontal arm, in correspondence of said support element, in the second vertical arm, in correspondence of said support bracket, for passage of camera supply wires.

The present invention will be now described, for illustrative but not limitative purposes, according to its preferred embodiments, with particular reference to the figure of the enclosed drawings, wherein:
figure 1 is a perspective view of a head according to the invention;
figure 2 shows support head according to the invention in a first position;
figure 3 shows support head according to the invention in a second position;
figure 4 shows support head according to the invention in a third position; and
figure 5 shows support head according to the invention in a fifth position.

Observing now the figures of the enclosed drawings, it is shown a support head, generically indicated by reference number 1, having a L-shaped structure comprising a first arm 2, coupled in the example shown in the figures with a tripod 3, but that can be coupled with every kind of support employed in the TV or movie field for supporting cameras, and a second vertical arm 4, rotatably coupled with said arm 2.

Said arm 2 is coupled with said tripod 3 (or other kind of support) by an element (that will be not described in further detail since it is well known and it is not part of the invention) permitting its full rotation along plan plane, about vertical axis A.

Said second vertical arm 4 provides above the coupling with a bracket 5, so that the latter can rotate along a 360° on the tilt plane. Camera (not shown) will be coupled on said bracket 5. A handle 6 is provided in order to obtain rotation of bracket 5, along with the mounted camera.

It is confirmed once again that coupling between tripod 3 and first arm 2, permitting a rotation of the latter along a 360° arc about axis A, and between second arm 4 and bracket 5, permitting a 360° rotation along the tilt plane (about axis B) will be not further described in the following since they are not specific object of the present invention.

On the contrary, the innovative feature of the invention is the coupling between the first arm 2 and the second arm 4, realising together said substantially L-shaped structure, permitting a 360° rotation about vertical axis C, which is offset and parallel with respect to the first vertical axis A.

By joint, generically indicated by reference number 7, head 1 according to the invention permits, differently with respect to the known solutions, fully exploiting 360° rotation of camera (not shown) along tilt plane, since it permits bringing bracket 5 in an outer position with respect to axis A.

Those skilled in the art will further understand that solution according to the invention permits exploiting camera mounted on head 1 in many ways and situations until now substantially impossible to obtain.

Just for example, it is easily possible mounting the head 1 on a support, such as a crane or like, with a reverse orientation, in order to make shootings skimming the water surface or the ground.

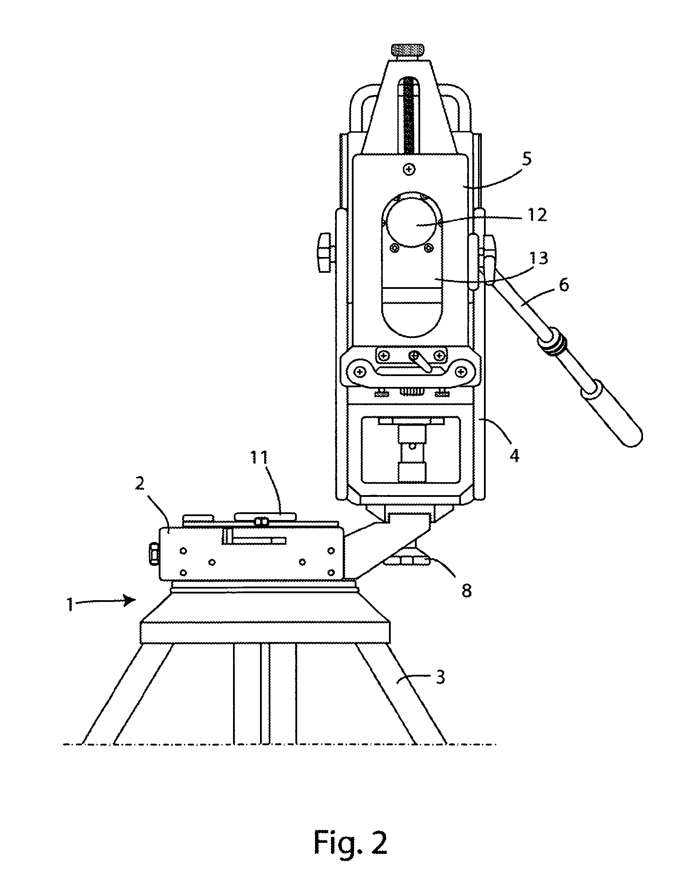

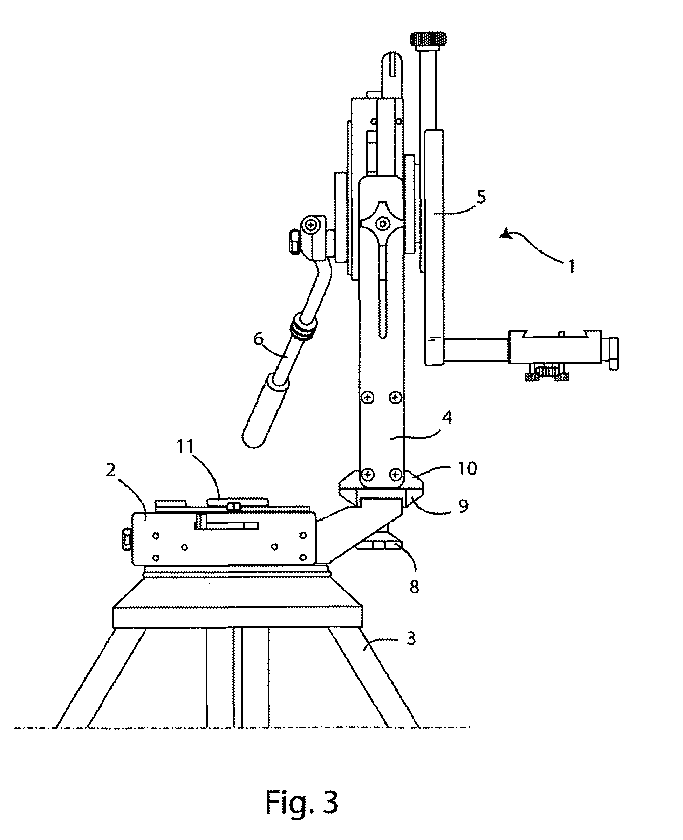

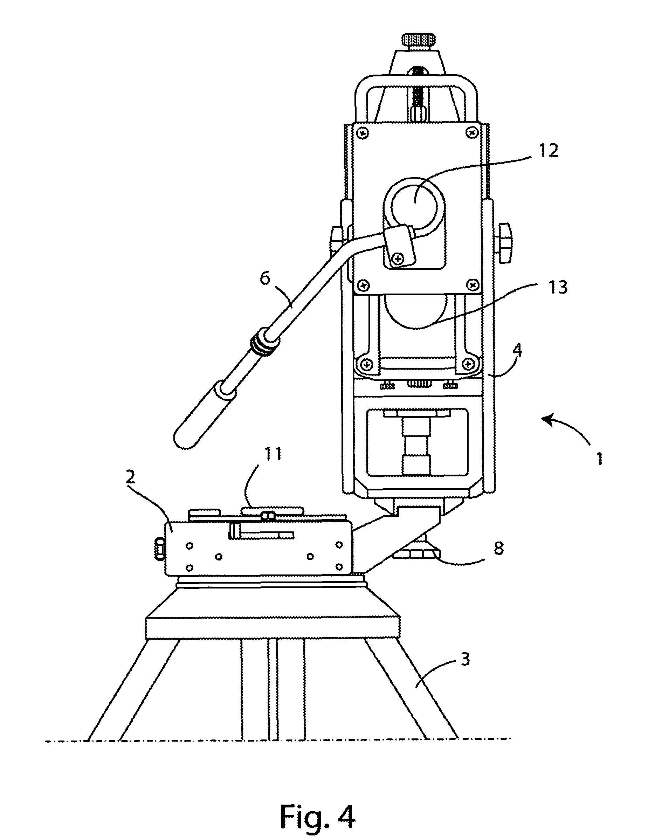

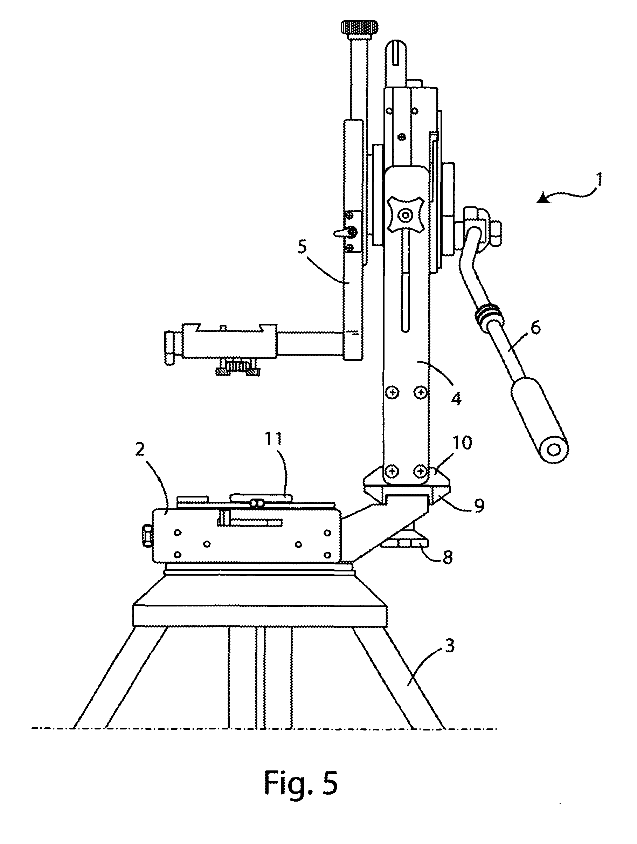

Particularly, it is noted from figures 2 - 5, joint 7, providing a fixing/release screw 8, and two plates, respectively indicated by reference numbers 9, 10, provided on the first arm 2 and on the second arm 4. Two plates 9, 10 can be tightened by screw 8 when the wished orientation of the head 1 is obtained.

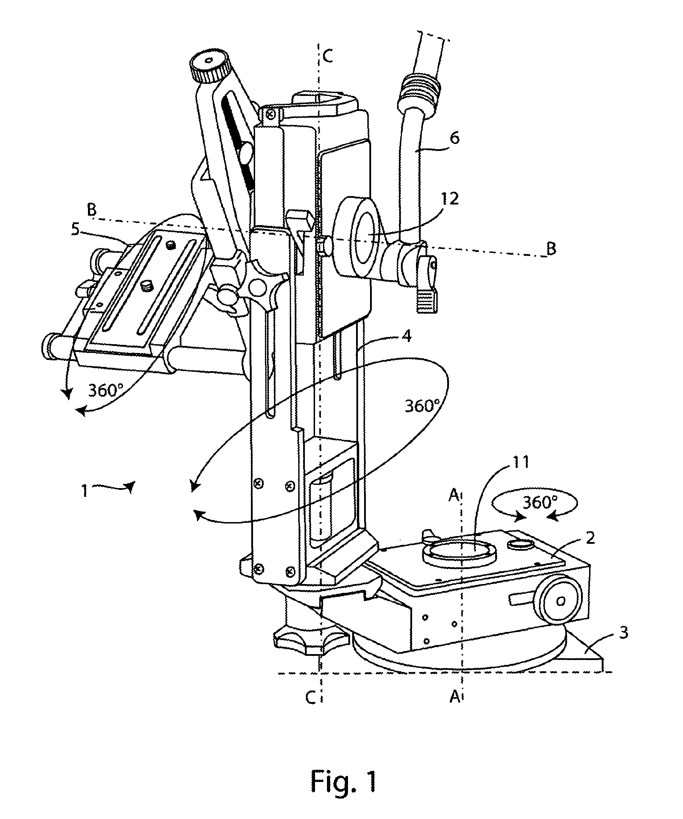

The four positions are shown in the above mentioned figures 2 - 5, that are obtained by a variable orientation of 90°, until obtaining a full 360° rotation (see figure 1).

As already said, plates 9, 10 can provide coupling grooves in order to obtain automatic fixing of the position set orientation points.

However, the solution according to the present invention can permit each orientation along the 360° arc.

In the solution shown in the figures, first arm 2, second arm 4 and bracket 5 are provided with a hole, respectively holes 11, 12, and 13, for passage of camera electric supply cables, so as not to have any limitation to the rotation along every plane.

From the above short specification, it is understood that the solution according to the invention permits overcoming the drawbacks of the known solutions, realising a camera support without any limitation to the camera orientation.

The present invention has been described for illustrative but not limitative purposes, according to its preferred embodiments, but it is to be understood that modifications and/or changes can be introduced by those skilled in the art without departing from the relevant scope of the invention as defined in the enclosed claims.

## Claims

1. Camera support head (1) for motion picture, TV and like shootings, comprising an L-shaped structure (2, 4), comprising a first horizontal arm (2), that is rotatably coupled along a 360° arc (pan plane) about a first vertical axis (A), located on a support element (3), such as a tripod, a dolly and like, and a second vertical arm (4), coupled at the lower end with said first horizontal arm (2), and bearing at the upper end a camera support bracket (5), said camera support bracket (5) being coupled with said second vertical arm (4) so as to be able to rotate along a 360° arc (tilt plane),
wherein rotation of said second vertical arm (4) with respect to said first horizontal arm (2) is obtained by a joint comprised of a first plate (9) integral with said first arm (2) and a second plate (10) integral with said second arm (4), so that coupling between said first horizontal arm (2) and said second vertical arm (4) permitting rotation of the second arm along a 360° arc, about a second vertical axis (C), offset and parallel with respect to said first vertical axis (A), said rotation being adjustable and fixable, fixing and releasing of rotation being obtained by fixing/releasing means (8) **characterized in that** the first arm (2), the second arm (4) and the support bracket (5) are provided with a hole, (11, 12, 13) for passage of camera electric supply cables.

2. Support head (1) according to claim 1, **characterized in that** rotation of said second vertical arm (4) with respect to said first horizontal arm (2) can be fixed in any point along the 360° arc.

3. Support head (1) according to claim 1 or 2, **characterized in that** said rotation can be fixed according to set orientation points.

4. Support head (1) according to any one of the preceding claims, **characterized in that** said fixing/release means (8) are comprised of a screw, of a pin, of a snapping element and like.

5. Support head (1) according to any one of the preceding claims, **characterized in that** rotation of said support bracket (5) with respect to said second vertical arm (4) is obtained by a handle (6).

## Patentansprüche

1. Kamerahaltekopf (1) für Film-, TV- und ähnliche Aufnahmen, umfassend eine L-förmige Struktur (2, 4), umfassend einen ersten horizontalen Arm (2), der drehbar gekoppelt ist entlang eines 360°-Bogens (pan plane - Schwenkebene) um eine erste vertikale Achse (A), angeordnet an einem Halteelement (3), wie etwa einem Stativ, einem Dolly und Ähnlichem, und einem zweiten vertikalen Arm (4), gekoppelt an dem unteren Ende mit dem ersten horizontalen Arm (2) und tragend an dem oberen Ende einen Kamerahalteträger (5), wobei der Kamerahalteträger (5) gekoppelt ist mit dem zweiten vertikalen Arm (4), um sich entlang eines 360°-Bogens (plane - Neigebene) drehen zu können,
wobei eine Drehung des zweiten vertikalen Arms (4) in Bezug auf den ersten horizontalen Arm (2) ermöglicht wird durch ein Gelenk, ausgebildet aus einer ersten Platte (9), integral mit dem ersten Arm (2), und einer zweiten Platte (10), integral mit dem zweiten Arm (4), so dass ein Koppeln zwischen dem ersten horizontalen Arm (2) und dem zweiten vertikalen Arm (4) eine Drehung des zweiten Arms erlaubt entlang eines 360°-Bogens um eine zweite vertikale Achse (C), versetzt und parallel in Bezug auf die erste vertikale Achse (A), wobei die Drehung einstellbar und fixierbar ist, wobei ein Fixieren und Lösen einer Drehung ermöglicht wird durch eine Fixier-/Lös-Einrichtung (8), **dadurch gekennzeichnet, dass** der erste Arm (2), der zweite Arm (4) und der Halteträger (5) mit einem Loch (11, 12, 13) versehen sind zur Passage von Kameraelektrozufuhrkabeln.

2. Haltekopf (1) gemäß Anspruch 1, **dadurch gekennzeichnet, dass** eine Drehung des zweiten vertikalen Arms (4) in Bezug auf den ersten horizontalen Arm (2) an irgendeinem Punkt entlang des 360°-Bogens fixiert werden kann.

3. Haltekopf (1) gemäß Anspruch 1 oder 2, **dadurch gekennzeichnet, dass** die Drehung gemäß festgelegten Orientierungspunkten fixiert werden kann.

4. Haltekopf (1) gemäß einem der vorhergehenden Ansprüche, **dadurch gekennzeichnet, dass** die Fixier-/Lös-Einrichtung (8) eine Schraube, ein Stift, ein Schnappelement und Ähnliches ist.

5. Haltekopf (1) gemäß einem der vorhergehenden Ansprüche, **dadurch gekennzeichnet, dass** eine Drehung des Halteträgers (5) in Bezug auf den zweiten vertikalen Arm (4) ermöglicht wird durch einen Griff (6).

## Revendications

1. Tête de support de caméra (1) pour prises de vues de cinéma, de télévision et analogues, comprenant une structure en forme de L (2,4), laquelle comprend un premier bras horizontal (2) qui est accouplé mobile en rotation sur un arc de 360° (plan panoramique) autour d'un premier axe vertical (A) situé sur un élément d'appui (3) tel qu'un trépied, un chariot et analogue, et un second bras vertical (4) accouplé audit premier bras horizontal (2) à son extrémité inférieure et qui porte à son extrémité supérieure une console support de caméra (5), ladite console support de caméra (5) étant accouplée audit second bras vertical (4) de manière à pouvoir tourner sur un arc de 360° (plan d'inclinaison),
dans laquelle la rotation dudit second bras vertical (4) par rapport audit premier bras horizontal (3) est obtenue au moyen d'un joint composé d'une première plaque (9) solidaire dudit premier bras (2), et d'une seconde plaque (10) solidaire dudit second bras (4) de sorte que l'accouplement entre ledit premier bras horizontal (2) et ledit second bras vertical (A) permet une rotation du second bras sur un arc de 360° autour d'un second axe vertical (C) qui est déporté par rapport audit premier axe vertical (1) et parallèle à celui-ci, ladite rotation pouvant être réglée et bloquée, le blocage et le déblocage de la rotation étant obtenus par des moyens de blocage et de déblocage (8),
**caractérisée en ce que** le premier bras (2), le second bras (4) et la console support (5) sont percées d'un trou (11, 12, 13) pour le passage des câbles d'alimentation électrique de la caméra.

2. Tête de support (1) selon la revendication 1, **caractérisée en ce que** la rotation dudit second bras vertical (4) par rapport audit premier bras horizontal (2) peut être bloquée en n'importe quel point de l'arc de 360°.

3. Tête de support (1) selon la revendication 1 ou 2, **caractérisée en ce que** ladite rotation peut être bloquée sur des points d'orientation définis.

4. Tête de support (1) selon une quelconque des revendications précédentes, **caractérisée en ce que** lesdits moyens de blocage et de déblocage (8) sont composés d'une vis, d'une goupille, d'un élément d'encliquetage et analogue.

5. Tête de support (1) selon une quelconque des revendications précédentes, **caractérisée en ce que** la rotation de ladite console support (5) par rapport audit second bras vertical (4) est obtenue au moyen d'une poignée (6).
